# EUROPEAN PATENT APPLICATION

(11) **EP 4 296 632 A1**
(43) Date of publication of application: **27.12.2023**
(21) Application number: 22315121.8
(22) Date of filing: 21.06.2022
(51) Int. Cl.: G01F 23/288

(54) **ARRANGEMENT FOR NUCLEAR LEVEL MEASUREMENT DEVICE**

(71) Applicant: Yara International ASA, 0277 Oslo (NO)
(72) Inventor: Porro, Lino Giovanni, 1040 Etterbeek (BE); Loviat, Maxime, 33810 Bordeaux (FR); Vaccaro, Marco, 44122 FERRARA (IT); Landi, Alberto, 44124 Ferrara (IT)
(74) Representative: AWA Sweden AB

(57) **Abstract**

The present invention relates to an arrangement for a measurement device adapted to measure a filling level of a fluid in a tank, the arrangement comprising: a first outer pipe having a closed free end intended to be positioned inside the tank; a second inner pipe of solid material, wherein the second inner pipe is arranged inside the first outer pipe without extending beyond or through the closed free end of the first outer pipe; a radioactive source encapsulated in an encapsulation, wherein the radioactive source and its encapsulation are arranged inside the second inner pipe; and a capsule partially surrounding the first outer pipe at the location of the radioactive source, the capsule being configured to absorb radiations from the radioactive source, and comprising an opening for allowing radiations emitted by the radioactive source to pass through. The present invention also relates to a system and a method of measuring a filling level of a fluid in a tank.

## Description

### Technical field

The present invention relates to an arrangement for a measurement device adapted to measure a filling level of a fluid in a tank, in particular a tank of a urea reactor or of a high pressure stripper of a urea plant. The present invention also relates to a system comprising such an arrangement, and to a method of measuring a level of a fluid in a tank involving such a system.

### Background

In urea reactor tanks (also called vessels) and in HP (high pressure) stripper tanks (also called exchanger), it is important to measure the level of urea liquid in the tank.

The level may be measured using a nuclear level measurement device. A nuclear level measurement device typically comprises a radioactive source positioned in the tank. The source may of the type radioactive rod or radioactive point source attached to a stick. The radioactive source generates radiation that is detected inside or outside the tank by a radiation detector, for example a scintillation detector. For nuclear level measurements, cesium or cobalt gamma radiation is often used, but the invention is not limited thereto. Depending on the fluid level, the radiation is more or less absorbed, hence giving an indication of the fluid level.

An example of a nuclear level measurement device is disclosed in JP2009198179 (Mitsubishi Chemicals Corp, 2009), which discloses a device for measuring a level of a liquid in a pressurized apparatus, in particular an apparatus for producing aromatic carboxylic acids, i.a. comprising: a radioactive source, positioned inside a tank of the apparatus in which the level of liquid is to be measured; a receiver, apt to receive and measure the radiation emitted by the source and positioned outside the tank; a charge-holder tube that houses the source and projects vertically inside the tank to support the source inside the tank and consisting of a double-cylinder setup, comprising a first, inner tube that houses the charge, and a second, protective cylinder that protects the inner tube, wherein a gap is present between the inner and outer tube through which the liquid can flow (in case of breach of the outer cylinder) towards a nozzle that discharges the liquid composition in the gap towards the outside of the tank body.

### Summary of the invention

The present disclosure provides an arrangement for a measurement device adapted to measure a filling level of a fluid in a tank with improved safety features.

Firstly, it was observed that the radiation levels outside a tank comprising a level measurement device using a radioactive probe could expose personnel working in proximity thereto to an annual dose close to or even exceeding the maximum dose legally allowed. Radiation sources, such as rods or point sources, emit radiations at 360°. And although the tanks in which the source is located are made of materials absorbing radiations, a non-negligible amount is able to go through the walls of the tank. So there was a need to decrease the radiation levels outside the tank, in particular in the areas where operators would spend time.

Secondly, if a corrosive fluid, retained in the tank, leaks into a charge-holder tube that houses the source (which comprises an encapsulation holding radioactive material and a stick, connected to the casing), and the corrosive fluid comes in contact with the encapsulation and the stick, the corrosive fluid may corrode the encapsulation and dissolve the radioactive material. In case of a point source, it may attack the connection between the stick and the encapsulation and separate the encapsulation from the stick, upon which the encapsulation may fall into the tank and possibly be sucked out, cause damage to a pump or downstream equipment and even may rupture in the downstream equipment. All of the above would create a safety and environmental issue. Furthermore, the radioactive material may be mixed with the corrosive fluid leading to a radioactive-contaminated batch of material.

A problem with the device in JP2009198179 is that the corrosive fluid, which is a liquid inside the tank, e.g. at elevated temperature, once it has breached the outer cylinder and leaks into the charge-holder tube could solidify on its way to the outside of the tank where the temperature is ambient temperature, and could not reach the nozzle (i.e. the leakage opening). In this case, the proposed double cylinder setup is not able to function anymore as a warning device. Furthermore, a small leakage would not provide enough liquid to reach the leakage opening in order to leak out and warn an operator of a leakage of the outer cylinder, while still corroding the inner cylinder. All the more, when the double-cylinder setup is positioned vertically, in which case the pressure needs to be high enough to drive the liquid upwards within the annular space towards the leakage opening.

It is an object of the present invention to overcome or at least alleviate the aforementioned problems.

According to a first aspect of the present invention, this and other objects is achieved by means of an arrangement for a measurement device adapted to measure a filling level of a fluid in a tank, in particular a tank of a urea reactor or of a high pressure stripper of a urea plant, the arrangement comprising: a first outer pipe having a closed free end intended to be positioned inside the tank; a second inner pipe of solid material, wherein the second inner pipe is arranged inside the first outer pipe without extending beyond or through the closed free end of the first outer pipe; a radioactive source encapsulated in an encapsulation, wherein the radioactive source and its encapsulation are arranged inside the second inner pipe such that they are protected from fluid in the tank by both the first outer pipe and second inner pipe; and a capsule at least partially surrounding the first outer pipe at the location of the radioactive source, wherein the capsule is configured to absorb radiations from the radioactive source, and wherein the capsule comprises an opening for allowing radiations emitted by the radioactive source to pass through.

It was found that it was possible to install inside the tank and connected to the existing arrangement a capsule made of a material absorbing radiations, such that the capsule reduces the radiation levels outside of the tank but does not absorb radiations in the space between the radioactive source and the one or more detector comprised in the tank.

Within the framework of this invention, a fluid may be a liquid, a slurry, a suspension, an emulsion, a liquified gas, a gas, a vapor, or any mixture thereof.

In one embodiment, a cross section of the arrangement includes the encapsulated radioactive source, the first outer pipe, the second inner pipe, and the capsule. In this way, the radioactive source and its encapsulation may indeed be protected from fluid in the tank by both the first outer pipe and second inner pipe.

In one embodiment, the first outer pipe and the second inner pipe are made of metal, in particular stainless steel. The pipes should be made of a material that does not deteriorate in the operating conditions of the tank. For example, if the arrangement is comprised in a urea stripper, the pipes should be made of a material resistant to carbamate corrosion.

The pipes absorb some of the radiations emitted by the radioactive source since most material absorb such radiations, in particular gamma radiations. The amount of radiations absorbed depends on the material selected for the pipe and the dimensions, in particular the thickness, of the pipes. However, the main role of the pipes is not to reduce the radiation levels inside and outside the tank but to protect the radioactive source from the corrosive conditions of the tank, as explained above.

The first outer pipe is partially surrounded by the aforementioned capsule. The capsule may be configured to absorb radiation emitted by the radioactive probe that is not substantially in the direction of a radiation detector. This capsule reduces the amount of radiation found outside the tank where it could harm operators working near the tank, but it does not weaken the signal received by the detector, so the level measurement is not affected.

The design of the capsule should be adapted to the radioactive source, in particular its geometry. Radioactive sources can be a rod, single point or multiple points. A tank may also comprise more than one radiation detector.

In one embodiment, the capsule is a pipe.

In one embodiment, the capsule comprises a slit along a part of or all of its length, which slit forms the aforementioned opening.

In one embodiment, the capsule is a pipe, in particular a pipe having a slit along a part of or all of its length, which slit forms the aforementioned opening. Such design may be an advantage if the radioactive source is a rod.

In one embodiment, the one or more openings of the capsule is a circular opening. Circular openings are easy to manufacture.

In one embodiment, the capsule comprises two or more openings. The number of openings of the capsule should be equal to the number of detectors comprised in the device, wherein the capsule is configured to be installed.

In one embodiment, the one or more openings have a circular shape and have a diameter of from 100% to 300%, from 125% to 300%, from 150% to 300%, from 100% to 275%, from 100% to 250%, or from 150% to 250% of the diameter of the radioactive source.

In one embodiment, the capsule is a tube and the opening is a slit, and the width of the split is from 100% to 300%, from 125% to 300%, from 150% to 300%, from 100% to 275%, from 100% to 250%, or from 150% to 250% of the diameter of the radioactive source.

In one embodiment, the capsule is a tube and the opening is a slit, wherein the length of the slit is at least equal to the length of the radioactive source. In one embodiment, the capsule is made of metal, in particular stainless steel. The capsule should be made of a material that does not deteriorate in the operating conditions of the tank. For example, if the arrangement is comprised in a urea stripper, the capsule should be made of a material resistant to carbamate corrosion.

In one embodiment, the capsule is 30 to 100 mm thick.

The radioactive source encapsulated in an encapsulation may be an encapsulated rod or a point source encapsulated in a casing at the end of a stick.

In one embodiment, the radioactive source comprises cesium and/or cobalt. Some isotopes of these metals are known to be radioactive, in particular gamma-radioactive.

The first outer pipe and the second inner pipe may be concentric, i.e. have a common center or common axis. This provides for an absorption of the radiation of the radioactive source by the walls of the pipes being the same in any radial direction. Hence, such a device may be inserted into the tank in which the fluid is to be measured in any radial position.

In one embodiment, the first outer pipe and the second inner pipe are straight. This allows an easy assembling and mounting of the device into the tank through an orifice, adapted to receive such a device.

According to one embodiment, an annular space is present between the first outer pipe and the second inner pipe. In the case of straight pipes, this allows an easy insertion of the second inner pipe into the first outer pipe. Furthermore, it allows for leak detection.

According to one embodiment, the annular space may contain one or more distance holders to keep the second inner pipe in a fixed position, preferably in a concentric position, relative to the first outer pipe.

In operation, the annular space between the inner and outer pipe is filled with gas, which is either stationary or moving in the annular space.

In one embodiment, the first outer pipe comprises at least one flush gas opening, intended to be positioned outside the tank and provided with a connection means to a flush gas circuit; and the arrangement comprises a flush gas circuit, comprising a connection means to the at least one flush gas opening, a flush gas source and a detector. In order to detect a breach or leakage in the first outer pipe, it may be an advantage to introduce a flush gas circuit, comprising a connection means to at least one flush gas opening comprised in the first outer pipe, a flush gas source and a detector. With a flush gas constantly moving inside the space between the first and second outer pipe, any leak in the first outer pipe would lead to a change in the chemical composition and/or physical properties of the gas moving between the first and second outer pipe. A suitable detector would notice almost immediately the change in composition or physical properties, reducing even further the risk of leak in the second outer pipe.

In one embodiment, the first outer pipe may comprise a single flush gas opening. In such a case any fluid leaking into the first outer pipe from the tank should be picked up by the flush gas in the annular space between the inner and outer pipe and be pushed out by the pressure rise in the annular space through the flush gas opening. Any distance holders present should not impede such a flow. In this embodiment, leaking fluid may be detected by a suitable detector, such as an NH₃ detector, in fluid communication with the flush gas opening, but without the leaking fluid coming into contact with the encapsulated radioactive source, as the encapsulated radioactive source is still protected by the second inner pipe. That is, the leaking fluid may be detected well in advance before the leaking fluid may attack the second inner pipe, which increases the reliability of the present arrangement. The leaking fluid may be the corrosive fluid or any gasses or vapors in the tank.

According to an alternative embodiment, the first outer pipe may comprise two flush gas openings, one for the flush gas flowing inwardly, and one for the flush gas flowing outwardly the annular space between the inner and outer pipe. In such a case, a flush gas can be continuously circulated inside the annular space. Any fluid leaking into the first outer pipe from the tank should be picked up by the flush gas in the annular space and be carried out by the circulating flush gas through one of the flush gas openings. Any distance holders present should not impede such a flow. In this way, leaking fluid may be detected by a suitable detector, such as an NH₃ detector, in fluid communication with the flush gas opening, but without the leaking fluid coming into contact with the encapsulated radioactive source, as the encapsulated radioactive source is still protected by the second inner pipe. That is, the leaking fluid may be detected well in advance before the leaking fluid may attack the second inner pipe, which increases the reliability of the present arrangement. The leaking fluid may be the corrosive fluid or any gasses or vapors in the tank. This arrangement has the advantage that no pressure rise is necessary to push the flush gas out of the annular space, and hence, provides an even quicker alert system in case of a leakage.

In one embodiment, the flush gas opening is arranged at the opposite end of the first outer pipe compared to the closed free end of the first outer pipe, allowing release and detection of the flush gas outside the tank.

The detector can be any chemical detector suitable to detect the chemical composition in the tank, or any derivative or part thereof. Examples are an NHs-detector, Oz-detector, CO-detector, COz-detector, and a gas chromatograph. Furthermore, the detector may also be any detector to detect a variation in the flush gas, such as a gas pressure detector detecting a gas pressure variation (such as when a leakage is formed in a high-pressure tank). The detector may be a conductivity detector.

The encapsulated radioactive source may be mounted to an end of a stick, wherein the stick is at least partly arranged in the second inner pipe such that a connection between the encapsulated radioactive source and the stick is placed inside second inner pipe and is protected by both the first outer pipe and second inner pipe. Without the second inner pipe, leaking fluid could damage the connection between the encapsulated radioactive source and the stick.

The arrangement may operate both at ambient pressure and at elevated pressure in a tank (i.e. referring to the pressure inside the tank), and both in vertical, inclined or horizontal position with respect to the position of the tank.

In another aspect, the present disclosure provides a system comprising: a tank, in particular a tank of a urea reactor or of a high pressure stripper of a urea plant; and a measurement device adapted to measure a filling level of a fluid in the tank, wherein the measurement device comprises: an arrangement according to the present disclosure; and a radiation detector adapted to detect radioactive radiation generated by the radioactive source of the arrangement, and to determine the filling level of the fluid based on the detected radioactive radiation, wherein the at least one opening of the capsule is substantially facing the radiation detector. This aspect may exhibit the same or similar features and technical effects as the first aspect, and vice versa. The capsule of the arrangement is configured to absorb radiation emitted by the radioactive source, except for the radiation that is not substantially emitted in the direction of the radiation -detector. This configuration, i.e. the (at least one) opening of the capsule substantially facing the radiation detector, reduces the radiation levels outside the tank and reduces the risk exposure of the personnel working near the system, but it does not weaken the signal received by the detector. The arrangement with or without the capsule may be provided through an opening in the wall or lid of a tank such that the closed free end of the first outer pipe and the radioactive source are positioned inside the tank. It may be an advantage to install the capsule once the first outer pipe has been provided through the wall or lid of the tank, such that the opening in the wall or the lid required to install the arrangement may be smaller.

In one embodiment, the system comprises two or more radiation detectors. It may be desirable in some systems to have two or more radiation detectors to measure a liquid level in two or more directions. The capsule should comprise a number of openings equal to the number of radiation detectors comprised in the system, such that the radiations emitted in the directions of all the detectors are not absorbed by the capsule.

In another aspect, the present disclosure provides a method of measuring a filling level of a fluid in a tank, in particular a tank of a urea reactor or of a high pressure stripper of a urea plant, which method comprises: providing a system according to the present disclosure; detecting radioactive radiation generated by the radioactive source of the arrangement; and determining the filling level of the fluid based on the detected radioactive radiation . The steps of detecting and determining can be performed by the aforementioned radiation detector. This aspect may exhibit the same or similar features and technical effects as the first and/or second aspects, and vice versa.

### Brief description of the drawings

These and other aspects of the present invention will now be described in more detail, with reference to the appended drawings showing an embodiment of the invention. The invention is however not limited to the disclosed embodiments.
Fig. 1a is a perspective view of a conventional arrangement for measuring the liquid level in a container.
Fig. 2a is a cross-sectional side view of an arrangement according to the present disclosure.
Fig. 2b is a cross-sectional front view of the arrangement of Fig. 2a.
Fig. 3 is a cross-sectional side view of a system according to the present disclosure, typically a HP stripper tank.
Figure 4a is a cross-sectional side view of a conventional arrangement comprising a radioactive level measurement system mounted on the top of a container, for example a urea synthesis tank.
Figure 4b is an embodiment of a capsule suitable to be installed in the system shown in Figure 4a.
Figure 4c is a cross-sectional top view of the arrangement according to the present invention mounted inside a urea synthesis tank.
Fig. 5 shows a flush gas circuit.

### Detailed description

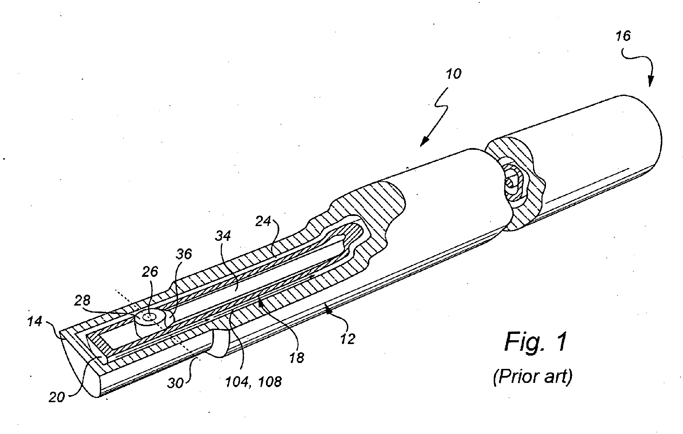

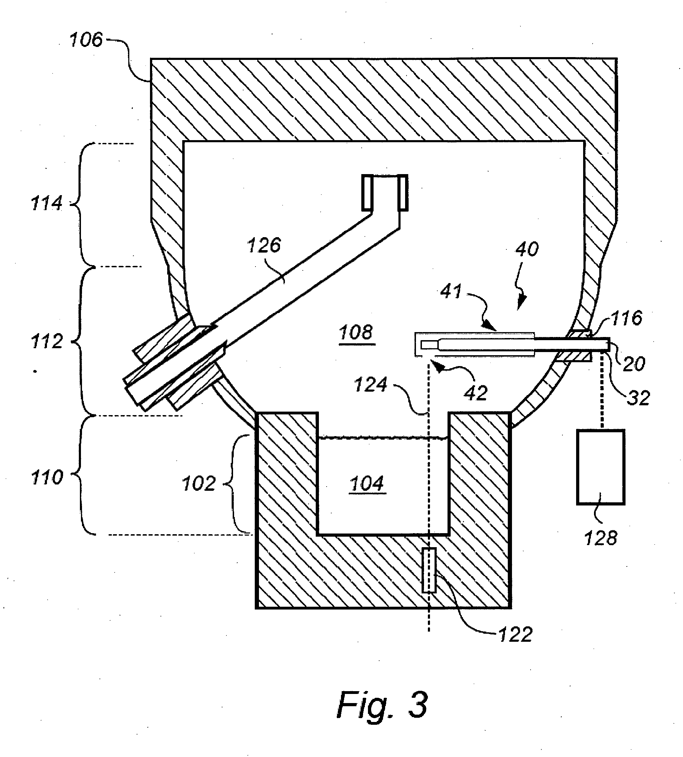

Fig. 1a shows a conventional arrangement 10 comprising a radioactive source. The arrangement 10 may be part of a measurement device adapted to measure a filling level 102 of a fluid 104 in a tank 106 (similar to Fig. 3), in particular a HP stripper tank of a urea plant.

The arrangement 10 comprises a first outer pipe 12. The first outer pipe 12 is straight. The first outer pipe 12 can be made of any material that is essentially inert to the liquid in the tank, such as for example stainless steel, composite materials and the like. The first outer pipe 12 has a closed free end 14 intended to be positioned inside the tank 106, and an opposite end 16 intended to be positioned outside the tank 106. The free end 14 may be closed by welding. The first outer pipe 12 may for example have an inner diameter of about 27 mm, and an outer diameter of about 65 mm, except at the closed free end 14 where the outer diameter can be smaller. The resulting reduced pipe wall thickness may facilitate measurement of the filling level 102 due to a decreased absorption of the radioactive radiation. The first outer pipe 12 may for example have a length of 1.5 meter, 1.0 meter, 0.5 meter, 0.25 meter and any length in between.

The arrangement 10 further comprises a second inner pipe 18. The second inner pipe 18 can be made of any material that is essentially inert to the liquid in the tank, such as for example stainless steel, composite materials and the like. The second inner pipe 18 is straight. The second inner pipe 18 is arranged inside the first outer pipe 12. In other words, the second inner pipe 18 is arranged in the cylindrical space defined by the hollow tubular body which is the first outer pipe 12. Furthermore, the second inner pipe 18 does not extend further into the tank 106 beyond or through the closed free end 14 of the first outer pipe 12, but has an end 20 arranged (positioned) inside the first outer pipe 12 proximal to the end 14. Furthermore, the first outer pipe 12 and the second inner pipe 18 are concentric, having a common axis 22. Furthermore, an annular space 24 is preferably present between the first outer pipe 12 and the second inner pipe 18, which annular space 24 extends along (the common axis 22 of) the first outer pipe 12 and the second inner pipe 18. To this end, it is held in place by distance holders, located in the annular space (not shown). The distance holders occupy only a small radial portion of the inside of the annular space. The arrangement 10 further comprises a radioactive source 26. In this particular example, the radioactive source 26 is a point source. With minor modifications, the radioactive source 26 could be a rod or a multi-point source. The radioactive source 26 is encapsulated in an encapsulation 28 for (two-way) protection. The encapsulation 28 can for example be made of any material that is essentially inert to the liquid in the tank, such as for example stainless steel, composite materials and the like. In case the radioactive source 26 is a point source, the encapsulation 28 may be spherical. The encapsulated radioactive source (i.e. the radioactive source 26 and its encapsulation 28) is arranged inside the second inner pipe 18. In other words, the encapsulated radioactive source 26, 28 is arranged in the cylindrical space defined by the hollow tubular body which is the second outer pipe 18. The encapsulated radioactive source 26, 28 is arranged inside the second inner pipe 18, such that it normally is protected from fluid in the tank 106 by both the first outer pipe 12 and second inner pipe 16. To this end, a cross section 30 of the arrangement includes the radioactive source 26 and its encapsulation 28, the first outer pipe 12, and the second inner pipe 18. Specifically, the encapsulated radioactive source 26, 28 may be arranged (posi-tioned) inside the second outer pipe 18 proximal, or touching to the end 20 of the second outer pipe 18, preferably where the outer diameter of the first outer pipe 12 is smaller. The fluid in the tank 106 may be the fluid 104 and/or gas 108 above the fluid 104.

The encapsulated radioactive source 26, 28 may be mounted to an end of an elongated stick 34 by means of a connection 36. The stick 34 is at least partly arranged in the second inner pipe 18, such that the connection 36 between the encapsulated radioactive source 26, 28 and the stick 34 is placed inside the second inner pipe 18 and is protected from fluid in the tank 106 by both the first outer pipe 12 and the second inner pipe 18. The stick 34 may be used to insert and remove the encapsulated radioactive source 26, 28 into and from the second inner pipe 18.

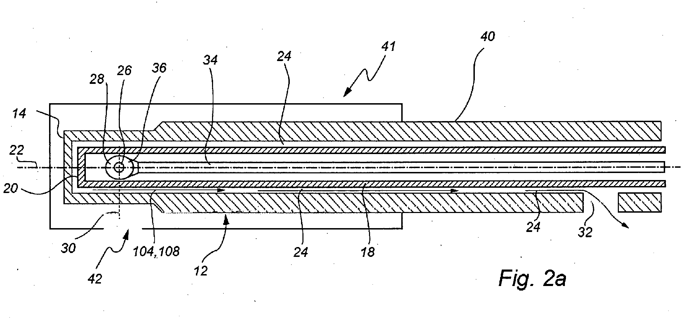

Fig. 2a is a cross-sectional side view of an arrangement according to the present disclosure. The arrangement 40 comprises all the features of the conventional arrangement 10 shown on Fig. 1. In addition, the arrangement 40 comprises a capsule 41 partially surrounding lengthwise the first outer pipe 12. The capsule 41 surrounds the closed free end 14 of the first outer pipe and part of its body. The capsule 41 comprises an opening 42 located directly at/in level with (in fig. 2a below) the radioactive source 26. The opening 42 allows the complete dose of radiations emitted in direction to a radiation detector to reach the radiation detector. The capsule 41 otherwise absorbs radiations emitted by the radioactive source 26 in all directions but the direction of the radiation detector.

The first outer pipe 12 may further comprise a flush gas opening 32. The flush gas opening 32 may be a through hole in the pipe wall of the first outer pipe 12. The flush gas opening 32 may be arranged at the aforementioned opposite end 16 of the first outer pipe 12.

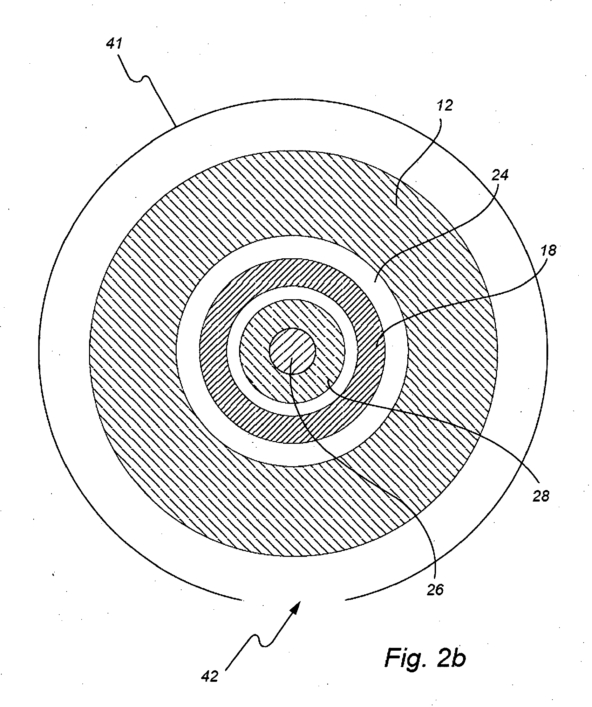

Fig. 2b is a cross-sectional front view of the arrangement of Fig. 2a. In the embodiment represented on Fig. 2b, the capsule 41 is cylindrical, and concentric with the first outer pipe 12 and the second inner pipe 18, and comprises the aforementioned opening 42.

Fig. 3 discloses a system according to one or more embodiments of the present disclosure, used in particular as an HP stripper tank.

The system comprises the aforementioned tank 106. The particular tank 106 illustrated in Fig. 3 is a tank of a high pressure stripper of a urea plant. The tank 106 comprises a lower cylindrical portion 110, an intermediate curved (concave or hemispherical) portion 112, and an upper cylindrical portion 114. In the illustrated state of operation, the tank 106 is partly filled with the fluid 104, namely a urea and carbamate aqueous solution. Above the fluid 104, the tank 106 contains gas 108, such as ammonia, carbon dioxide and/or water vapors.

The system further comprises the measurement device, which is adapted to measure the filling level 102 of the fluid 104 in the tank 106.

The measurement device comprises the arrangement 40 as defined and discussed above. The arrangement 40 is provided such that the closed free end 14 of the first outer pipe 12 and the end 20 of the second inner pipe 18 and the encapsulated radioactive source 26, 28 are positioned inside the tank 104, whereas the opposite end 16 of the first outer pipe 12 as well as the flush gas opening 32 are positioned outside the tank 104. The arrangement 40 is in the system generally horizontally oriented. The arrangement 40 comprises the capsule 41 to reduce the radiation levels outside of the tank 106. The capsule 41 surrounds the first outer pipe, in particular its closed free end present inside the tank, but the capsule 41 comprises the opening 42 located in the direction between the radioactive source of the arrangement 40 and a (radiation) detector 122, such that the capsule 41 does not absorb any radiation emitted by the radioactive source in the direction of the detector 122.

The measurement device further comprises the detector 122. The detector is 122 provided below the bottom of the lower cylindrical portion 110 of the tank 106. The detector 122 may be laterally aligned with the radioactive source 26, as indicated by the vertical line 124. The detector 122 is adapted to detect radioactive radiation generated by the radioactive source 26, and to determine the filling level 102 of the fluid 104 based on the detected radioactive radiation. It should be noted that the means to determine the filling level 102 of the fluid 104 based on the detected radioactive radiation may be located remote of the position of item 122 shown in fig. 3.

In (normal) operation, the detector 122 detects radioactive radiation generated by the radioactive source 26 and determines the filling level 102 of the fluid 104 based on the detected radioactive radiation. Furthermore, the encapsulated radioactive source 26 is protected from fluid 104, 108 in the tank 106 by the first outer pipe 12, the second inner pipe 18, and partially the capsule 41. Vapors rising from the fluid 104 may reach the first outer pipe, but the liquid falling into the tank comes into contact with the capsule 41 and part of the first outer pipe 12, which is not surrounded by the capsule 41.

However, for example the welding at the free end 14 of the first outer pipe 12 could have defects and be subjected to a higher corrosion risk than the (rest of) the first outer pipe 12. Hence at some point fluid 104, 108 from the tank 106 could leak into the first outer pipe 12 through the welding (see Fig. 2a), but without the leaking fluid 104, 108 coming into contact with the encapsulated radioactive source 26, 28 which is still protected by the second inner pipe 18.

Instead the fluid 104, 108 leaking into the first outer pipe 12 is allowed to flow through the annular space 24 (see Fig. 2a) between the first outer pipe 12 and the second inner pipe 18, and out through the flush gas opening, where the fluid 104, 108 can be detected. The fluid 104, 108may for example be detected by a NH₃ detector 128 arranged outside the tank 106 and in fluid communication with flush gas opening 32.

In a fertilizer-producing plant located in Ferrara, Italy, the radioactivity levels were measured outside a urea stripper. At a distance of 2.8 m from the source, the radioactivity level was measured at 7 µSv/h. A capsule according to the present disclosure was installed inside the stripper, and the radioactivity was measured at 1.0 pSv/h at the same location, making the working conditions much safer for the personnel working around it.

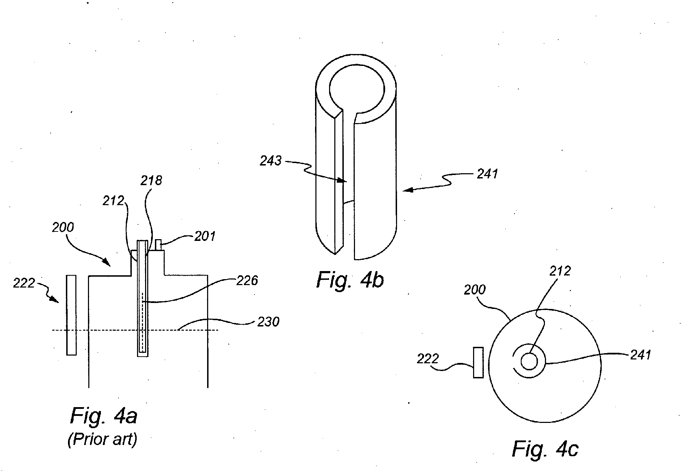

Fig. 4a discloses is across-sectional view of the top of a conventional arrangement for radioactive level measurement in a device 200, for example a urea reactor, wherein the radioactive source 226 is a rod. The radioactive source may also be a plurality of point sources mounted on a rod or stick or rope. The arrangement comprises a first outer pipe 212, a second inner pipe 218, an encapsulated radioactive rod 226, and a radiation detector 222 located outside of the reactor 200.

A urea reactor may comprise a nozzle 201 to vent the reactor, i.e. allow some gases to exit the reactor 200. The first outer pipe 212 has two ends, a bottom closed end located inside the reactor, and an open top end located outside the reactor.

Fig. 4b discloses a capsule 241 according to the present invention suitable for such an arrangement. The capsule 241 has a vertical cylindrical shape with an open top end and an open bottom end. Specifically, the capsule 241 may have the shape of a right circular hollow cylinder. The cylinder comprises a slit 243 in its wall. The slit 234 may be straight, and/or extend vertically throughout the complete length/height of the capsule 241, as shown in fig. 4b. The width of the slit may be from 100% to 300%, or from 150% to 250% of the diameter of the radioactive source.

The capsule 241 is configured to be attached to the first outer pipe 212 of the arrangement of Fig. 4a such that the slit 243 is between the detector 222 and the radioactive source 226, such that the capsule 241 absorbs radiations emitted by the source 226 in all directions, except the radiations emitted in the direction of the detector 222, such that the level measurement is not modified by the capsule. The inner diameter of the capsule 241 is from 1.0 to 20 mm larger than the outer diameter of the first outer pipe 212.

Fig. 4c is a cross-section following line 230 from Fig. 4a with the capsule of Fig. 4b installed. For clarity purposes, only the first outer pipe 212 is represented. The capsule 241 is concentric with the first outer pipe 212, and the slit 243 is positioned such that the radiations emitted from the source in the direction of the detector 222 are not absorbed by the capsule 241.

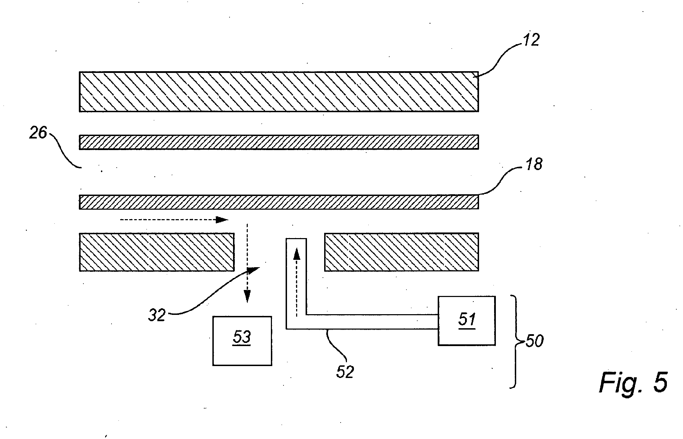

Fig. 5 discloses one end of an embodiment of the arrangement according to the present disclosure, in particular the end located outside the tank in which the arrangement is installed. The arrangement comprises a first outer pipe 12, the second inner pipe 18, and the encapsulation 26 for the radioactive source. The first outer pipe comprises a flush gas opening 32, and a flush gas circuit 50. The flush gas circuit 50 comprises a flush gas source 51, a connection 52 from the flush gas source to the first outer pipe 12, and a detector 53. The flush gas source 51 is configured to provide a stream of flush gas, for example nitrogen, to the arrangement, which flows in the space between the first outer pipe 12, and the second inner pipe 18. The connection 52 directs the stream of flush gas from the flush gas source 51 to the flush gas opening 32. The detector 53 is located near the flush gas opening 32 such that it is able to analyze the gas stream leaving the flush gas opening. The detector 53 itself may be near the flush gas opening, or a connection may be added to connect the flush gas opening 32 to the detector 53.

While the present invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefor not limited to the specific details, representative apparatus and method, and illustrative example shown and described. Accordingly, departures may be made from such details without departing from the gist or scope of the applicant's general inventive concept.

## Claims

1. An arrangement (40) for a measurement device adapted to measure a filling level (102) of a fluid (104) in a tank (106), in particular a tank of a urea reactor or of a high pressure stripper, of a urea plant, the arrangement comprising:
- a first outer pipe (12) having a closed free end (14) intended to be positioned inside the tank;
- a second inner pipe (18) of solid material, wherein the second inner pipe is arranged inside the first outer pipe without extending beyond or through the closed free end of the first outer pipe;
- a radioactive source (26) encapsulated in an encapsulation (28), wherein the radioactive source and its encapsulation are arranged inside the second inner pipe such that they are protected from fluid (104, 108) in the tank by both the first outer pipe and second inner pipe; and
- a capsule (41) at least partially surrounding the first outer pipe (12) at the location of the radioactive source, wherein the capsule is configured to absorb radiations from the radioactive source, and wherein the capsule comprises at least one opening (42) for allowing radiations emitted by the radioactive source to pass through.

2. An arrangement according to claim 1, wherein a cross section (30) of the arrangement includes the encapsulated radioactive source, the first outer pipe, the second inner pipe, and the capsule.

3. An arrangement according to claim 1 or 2, wherein the capsule is a pipe.

4. An arrangement according to any one of claims 1 to 3, wherein the at least one opening of the capsule is a slit along a part of or all of the length of the capsule, or the at least one opening is a circular opening.

5. An arrangement according to any one of the preceding claims, wherein an annular space (24) is present between the first outer pipe and the second inner pipe.

6. An arrangement according to claim 5, wherein the annular space contains one or more distance holders to keep the second inner pipe in a fixed position relative to the first outer pipe.

7. An arrangement according to any one of the preceding claims, wherein the first outer pipe comprises at least one flush gas opening (32), and the arrangement further comprises a flush gas circuit (50) comprising a connection means (52) to the flush gas opening (32), a flush gas source (51), and a detector (53).

8. An arrangement according to claim 7, wherein a single flush gas opening is arranged at the opposite end (16) of the first outer pipe (12) compared to the closed free end (14).

9. An arrangement according to claim 7, wherein two flush gas openings are arranged at the opposite end (16) of the first outer pipe (12) compared to the closed free end (14).

10. An arrangement according to any one of claims 7 to 9, wherein the flush gas source (32) is a nitrogen, N₂, source or an instrument air source.

11. An arrangement according to any one of claims 7 to 10, wherein the detector is selected from the group of an NHs-detector, Oz-detector, CO-detector, CO₂-detector, a gas chromatograph, a conductivity meter, and a gas pressure detector.

12. An arrangement according to any one of the preceding claims, wherein the radioactive source (26) is a radioactive rod or a radioactive point source in the encapsulation attached to a stick.

13. An arrangement according to any one of the preceding claims, wherein the encapsulated radioactive source (26) is mounted to an end of a stick (34), and wherein the stick is at least partly arranged in the second inner pipe such that a connection (36) between the encapsulated radioactive source and the stick is placed inside second inner pipe and is protected by both the first outer pipe and second inner pipe.

14. A system, comprising:
• a tank (106), in particular a tank of a urea reactor or of a high pressure stripper of a urea plant; and
• a measurement device adapted to measure a filling level (102) of a fluid (104) in the tank (106), wherein the measurement device comprises:
- an arrangement (40) according to any one of claims 1 to 12; and
- a radiation detector (122) adapted to detect radioactive radiation generated by the radioactive source of the arrangement, and to determine the filling level of the fluid based on the detected radioactive radiation, wherein the at least one opening (42) of the capsule (41) is substantially facing the radiation detector (122).

15. A method of measuring a filling level (102) of a fluid (104) in a tank (106), in particular a tank of a urea reactor or of a high pressure stripper of a urea plant, which method comprises:
- providing a system according to claim 14;
- detecting radioactive radiation generated by the radioactive source of the arrangement; and
- determining the filling level of the fluid based on the detected radioactive radiation.
